# NEUE EUROPÄISCHE PATENTSCHRIFT

(11) **EP 2 467 422 B2**
(45) Veröffentlichungstag und Bekanntmachung des Hinweises auf die Entscheidung über den Einspruch: **20.10.2021**
(45) Hinweis auf die Patenterteilung: 22.01.2014
(21) Anmeldenummer: 10739640.0
(22) Anmeldetag: 06.08.2010
(51) Int. Cl.: C08K 5/00, C08L 9/00, C09J 109/00

(54) **KAUTSCHUK-ZUSAMMENSETZUNG MIT HOHER ELASTIZITÄT**
RUBBER COMPOSITION WITH HIGH ELASTICITY
COMPOSITION DE CAOUTCHOUC À ÉLASTICITÉ SUPÉRIEURE

(30) Priorität: 18.08.2009 DE 102009028607
(43) Veröffentlichungstag der Anmeldung: 27.06.2012
(73) Patentinhaber: Henkel AG & Co. KGaA, 40589 Düsseldorf (DE)
(72) Erfinder: KOHLSTRUNG, Rainer, 68723 Plankstadt (DE); RAPPMANN, Klaus, 69469 Weinheim-Rittenweier (DE)
(86) Internationale Anmeldenummer: PCT/EP2010/061484
(87) Internationale Veröffentlichungsnummer: WO 2011/020714

(56) Entgegenhaltungen:
- WO-A1-02/47901
- WO-A2-02/48255
- DE-A1-102006 014 190
- DE-A1-102006 016 577
- DE-A1-102007 029 644

## Beschreibung

Die Erfindung betrifft einkomponentige, hitzehärtbare Zusammensetzungen auf der Basis von flüssigen Kautschuken, die ein plastisolartiges Fließverhalten haben. Sie sind sowohl als Bördelnahtklebstoff als auch als Bördelnahtversiegelung im Automobilrohbau geeignet, was Logistik und Applikationstechnik vereinfacht. Weiterhin betrifft die Erfindung ein Fahrzeug, bei dem Bördelnähte mit der erfindungsgemäßen Zusammensetzung nach deren Aushärtung verklebt und/oder versiegelt sind.

Die Verklebung beziehungsweise das Abdichten von Blechteilen im Fahrzeugbau, insbesondere bei Karosserien von Automobilen, wird häufig an Rohblechteilen vorgenommen. Die Aushärtung der hierbei eingesetzten Kleb-/Dichtstoffe erfolgt später in den Lacktrockenöfen. Vorher durchlaufen die verklebten beziehungsweise abgedichteten Teile Reinigungs-, Phosphatier- und Tauchgrundierungsstufen. Durch die in diesen Stufen verwendeten Behandlungsmittel können die Kleb- beziehungsweise Dichtmittel aus den Klebefugen gespült werden. Um diesen Anforderungen gerecht zu werden, sind verschiedene Vorgehensweisen bekannt geworden, z.B. eine thermisch/induktive Vorhärtung von niedrigviskosen, pastösen Kleb-/Dichtstoffen, die Verwendung von Klebstoffen in Form von Lösungsmittel-haltigen Zusammensetzungen oder Hotmelts, als zweikomponentige Produkte oder auch als Formteile, die in der Regel manuell appliziert werden und zum Zeitpunkt der Applikation eine Eigenklebrigkeit besitzen.

Niedrigviskose, pastöse Kleb- / Dichtstoffe lassen sich besonders einfach durch Spritzbeziehungsweise Sprühapplikationen oder Punktapplikationen oder auch Extrusionen einsetzen. Daher finden derartige Produkte insbesondere auf der Basis von Plastisolen auch im Rohbau sehr häufig Einsatz.

Unter Plastisolen werden allgemein Dispersionen von organischen Kunststoffen in Weichmachern verstanden, welche beim Erwärmen auf höhere Temperatur gelieren und beim Abkühlen aushärten. Die in der Praxis heute noch gebräuchlichen Plastisole enthalten ganz überwiegend feinpulvriges Polyvinylchlorid (PVC), welches in einem flüssigen Weichmacher dispergiert ist und eine Paste bildet. Derartige Polyvinylchloridplastisole finden für die verschiedensten Zwecke Anwendung. Sie werden u.a. als Dichtungsmassen, z.B. für Nahtabdichtungen bei Metallbehältern oder als Bördelnahtkleber in der Metallindustrie und als Korrosionsschutzüberzüge für Metalle (beispielsweise als Unterbodenschutz für Kraftfahrzeuge) eingesetzt. Es sind auch Plastisole auf der Basis von feinpulvrigen Methacrylatcopolymeren (PMMA) oder Styrolcopolymeren bekannt geworden. Derartige Plastisole, insbesondere auf Basis von PVC oder PMMA werden auch im Automobilrohbau in umfangreichem Masse eingesetzt, beispielsweise zur Unterfütterung von versteifenden Strukturen wie Motorhauben, Kofferraumdeckeln, Türen und Dachkonstruktionen sowie zur Bördelnahtverklebung und zur Versiegelung von Nähten aus anderweitigen Fügungsverfahren. Vorteilhaft bei der Verwendung von Plastisolen für diese Anwendungszwecke ist deren günstiges Fließverhalten, insbesondere bei Raumtemperatur. Um die Wäscherbeständigkeit in den diversen Reinigungs-, Phosphatier- und Tauchgrundierungsstufen bei der Fertigung der Automobilkarossen zu gewährleisten, werden diese Plastisol - Zusammensetzungen häufig in einem Vorgelierungsprozess soweit angeliert, dass ihre Viskosität hoch genug ist, um diese Wäscherbeständigkeit und eine Anfangsfestigkeit der Bauteile zu gewährleisten.

Der Begriff "Plastisol" im Sinne der Erfindung bezieht sich ausschließlich auf das rheologische Verhalten und nicht auf die Zusammensetzung aus Polymerpulver(n) mit Weichmacher(n).

Als alternative Klebstoffe oder Dichtungs- und Versiegelungsmassen wurden in jüngerer Zeit verstärkt Zusammensetzungen auf der Basis von vulkanisierbaren Kautschukmischungen vorgeschlagen. Die EP-B-97394 beschreibt eine Klebstoffmischung auf der Basis eines flüssigen Polybutadienkautschuks, pulverförmigem Schwefel, organischen Beschleunigern und gegebenenfalls festem Kautschuk. Es ist bekannt, dass derartige, auf flüssigen Polybutadienen basierende Klebstoffe durch entsprechende Auswahl der Menge an Schwefel und Beschleunigern Festigkeitswerte erreichen können, die denen von flexibilisierten Epoxyklebstoffen gleichwertig sind. Während diese Formulierungen gute Härtungseigenschaften und gute Alterungsbeständigkeit haben und auch auf normalem geölten Stahlblech einigermaßen brauchbare Haftung zeigen, ist ihre Einsetzbarkeit für die diversen verzinkten Stahlbleche unbefriedigend. Außerdem ist die Bruchdehnung dieser hochfesten Kautschuk-klebstoffe sehr gering. Sie sind nicht spritzbar und müssen bei höherer Temperatur extrudiert werden.

Zur Verbesserung der Haftung schlägt die DE-C-3834818 vor, für den flüssigen Kautschuk OHterminierte Polybutadiene einzusetzen. Gemäß EP-B-441244 können als funktionelles Kautschukpolymer neben hydroxyfunktionellen Homo- oder Copolymeren auch solche mit Thiol-, Amino-, Amido-, Carboxyl-, Epoxy-, Isocyanat-, Anhydrid- oder Acetoxy-Gruppen eingesetzt werden, wobei jedoch die ausgehärtete Klebstoffmischung eine Bruchdehnung aufweist, die 15 % nicht übersteigt.

Die WO 96/23040 beschreibt einkomponentige, hitzehärtende Strukturklebstoffe auf der Basis von Flüssigkautschuken, die gegebenenfalls anteilig funktionelle Gruppen enthalten können, Festkautschuken, thermoplastischen Polymerpulvern und Schwefel sowie Vulkanisationsbeschleunigern. Diese eignen sich zum Verkleben von Metallteilen. Es können Zugscherfestigkeiten von über 15 MPa bei gleichzeitiger hoher Bruchdehnung von über 15 % erhalten werden. Diese Klebstoffe eignen sich insbesondere für den Einsatz im Rohbau in der Automobilindustrie.

Die Kautschuk-Zusammensetzungen des vorgenannten Standes der Technik eigenen sich generell sehr gut für ihren Einsatz im Rohbau bei der Automobilfertigung. Sie weisen auch hervorragende Eigenschaften bezüglich der Wäscherbeständigkeit, ihrer Alterungsbeständigkeit und der geforderten technischen Eigenschaften auf. Ein wesentlicher Nachteil dieser Kautschukmassen ist jedoch ihre sehr hohe Viskosität, so dass diese in aller Regel nur warm verpumpbar appliziert werden können. Sie können nicht mit herkömmlichen Spritzverfahren, wie z.B. den Airless-Verfahren aufgetragen werden.

WO 2002/048255 offenbart heiß härtbare Kautschukzusammensetzungen, die diese Situation verbessern. Gegenstand dieses Dokuments ist eine heiß härtende reaktive Zusammensetzung auf der Basis von natürlichen und / oder synthetischen, olefinische Doppelbindungen enthaltenden flüssigen Elastomeren und Vulkanisationsmitteln, wobei diese Zusammensetzungen mindestens ein flüssiges cis-1,4-Polyisopren mit einem Molekulargewicht zwischen 20 000 und 70 000 sowie ein Vulkanisationssystem aus Schwefel, Beschleuniger und Chinonoximen enthalten. Zusätzlich kann diese Zusammensetzung mindestens ein weiteres flüssiges Polyen aus der Gruppe bestehend aus 1,2-Polybutadien, 1,4-Polybutadien, Polyisopren, Polybuten, Polyisobutylen, Copolymere des Butadiens und/oder Isoprens mit Styrol und/oder Acrylnitril, Copolymere von Acrylsäureestern mit Dienen enthalten, wobei das Molekulargewicht des flüssigen Polyens im Bereich von 900 bis etwa 40000 liegt. Dabei kann (können) das oder die flüssige(n) Polyen(e) zusätzlich terminale und/oder statistisch verteilte Carboxylgruppen, Carbonsäureanhydridgruppen, Hydroxylgruppen, Aminogruppen, Mercaptogruppen oder Epoxygruppen als funktionelle Gruppen aufweisen.

Mit den in diesem Dokument offenbarten Zusammensetzungen wird jedoch im allgemeinen nicht die hohe Elastizität bei gleichzeitig hoher Festigkeit (insbesondere Zugscherfestigkeit) erreicht, die für die gleichzeitige Verwendung als Bördelnahtklebstoff und als Bördelnahtversiegelung erforderlich ist.

Die vorliegende Erfindung stellt sich die Aufgabe, folgende Aufgabekombination zu lösen:
- Bereitstellung eines Versiegelungs- beziehungsweise Bördelnahtklebstoffs für den Automobilbau mit hoher Dehnung (> 130 %) bei gleichzeitig hoher Zugscherfestigkeit (> 4 MPa) mit hervorragender Alterungsbeständigkeit auf Basis von Kautschuk.
- Das gesuchte Produkt soll als Kombinationsprodukt für die Verklebung und Versiegelung von beispielsweise Anbauteilen im Automobilbau zur Anwendung im Rohbau beziehungsweise in der Lacklinie einsetzbar sein.
- Eine Vorhärtung des Produkts soll im Rohbauofen bei 120 - 150 °C für 8 - 30 Minuten möglich sein.
- Schnelle Applikation des Produkts durch Spritzen, Sprühen oder Extrudieren.

Diese Aufgabenkombination wird erfindungsgemäß gelöst durch eine heiß härtende reaktive Zusammensetzung auf der Basis von natürlichen und/oder synthetischen, olefinische Doppelbindungen enthaltenden Polymeren und Vulkanisationsmitteln, die
a) mindestens ein flüssiges cis-1,4-Polyisopren mit einem gewichtsmittleren Molekulargewicht zwischen 20000 und 70000 (beeinflusst insbesondere die hohe Elastizität der Zusammensetzung positiv)
b) ein Vulkanisationssystem,
c) mindestens ein bei 22 °C flüssiges Polybutadien
enthält,
dadurch gekennzeichnet, dass
- das flüssige cis-1,4-Polyisopren a) einen Anteil an der gesamten Zusammensetzung im Bereich von 9 bis 15 Gew.-% hat,
- als Vulkanisationssystem b), bezogen auf die gesamte Zusammensetzung, 6 bis 10 Gew.-% Schwefel und 0,25 bis 20 Gew.-% Vulkanisationsbeschleuniger enthalten sind, und
- das bei 22 °C flüssige Polybutadien c) einen Anteil an der gesamten Zusammensetzung im Bereich von 16 bis 29 Gew.-% hat.

Die Erfindung beruht auf der Erkenntnis, dass die erfinderische Aufgabenstellung gelöst werden kann durch Auswahl geeigneter Komponenten in bestimmten Mengenbereichen, die zumindest hinsichtlich der Komponente c) außerhalb der in WO 2002/048255 offenbarten Mengenbereiche liegen.

Im Rahmen der vorliegenden Erfindung kann das gewichtsmittlere Molekulargewicht (M_{w}) mittels Gelpermeationschromatographie (GPC) mit Polystyrol als Standard bestimmt werden. Die Angabe, dass eine Komponente bei 22 °C flüssig ist, bezieht sich auf Atmosphärendruck. Mengenangaben in Gew.-% beziehen sich stets auf die gesamte Zusammensetzung.

Bei dem bei 22 °C flüssigen Polybutadien c) liegen vorzugsweise 60 bis 90 % der Doppelbindungen als cis-1,4-Doppelbindungen vor. Sein gewichtsmittleres Molekulargewicht liegt vorzugsweise im Bereich von 1500 bis 3000.

Vorzugsweise enthält die Zusammensetzung zusätzlich als weitere Komponente d) 0,5 bis 3,5 Gew.-%, bezogen auf die gesamte Zusammensetzung, bei 22 °C flüssiges stereospezifisches Polybutadien mit einem vinyl-1,2-Anteil im Bereich von 40 bis 60 % und mit einem gewichtsmittleren Molekulargewicht im Bereich von 1500 bis 3000. Der Zusatz dieser Komponente erleichtert es, die angestrebte Kombination von Eigenschaften nach der Aushärtung der Zusammensetzung einzustellen, die diese sowohl als Bördelnahtversiegelung als auch als Bördelnahtklebstoff geeignet macht. Dieses Polymer trägt insbesondere zur notwendigen Festigkeit der Zusammensetzung bei.

Die Haftung der erfindungsgemäßen Zusammensetzung auf metallischen Substraten wird verbessert, wenn diese als weitere Komponente e) 2 bis 8 Gew.-%, bezogen auf die gesamte Zusammensetzung, bei 22 °C flüssiges Polybutadien mit Carboxyl- oder Carboxylanhydridgruppen und mit einem gewichtsmittleren Molekulargewicht im Bereich von 1500 bis 3000 enthält. Dies ist daher eine bevorzugte Ausführungsform der vorliegenden Erfindung. Falls erforderlich können zusätzlich weitere Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren beziehungsweise -ester (Abietinsäurederivate), Polyamine, Polyaminoamide, Anhydride und Anhydrid-enthaltende Copolymere. Auch der Zusatz von Polyepoxyharzen in geringen Mengen kann bei manchen Substraten die Haftung verbessern. Falls Klebrigmacher beziehungsweise Haftvermittler eingesetzt werden, hängt deren Art und Menge von der Polymerzusammensetzung sowie dem Substrat, auf welches die Zusammensetzung appliziert wird, ab. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.

Gegebenenfalls können die erfindungsgemäßen Zusammensetzungen noch fein verteilte thermoplastische Polymerpulver enthalten. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere wie beispielsweise Ethylenvinylacetatcopolymere. Obwohl die Teilchengröße beziehungsweise Teilchengrößenverteilung der Polymerpulver nicht besonders kritisch zu sein scheint, sollte die mittlere Teilchengröße unter 1 mm, vorzugsweise unter 350 µm liegen. Die Menge des ggf. zugesetzten thermoplastischen Polymerpulvers liegt zwischen 0 und 20 Gew.%, bevorzugt zwischen 2 und 10 Gew.%.

Die Vernetzungs- beziehungsweise Härtungsreaktion der Kautschukzusammensetzung hat einen entscheidenden Einfluss auf die Abdichtfunktion und die Klebstoffwirkung. Daher muss das Vulkanisationssystem besonders sorgfältig ausgewählt und abgestimmt werden. Als Vulkanisationssystem b) sind, bezogen auf die gesamte Zusammensetzung, 6 bis 10 Gew.-% Schwefel und 0,25 bis 20 Gew.-% Vulkanisationsbeschleuniger enthalten. Für das Vulkanisationssystem eignen sich eine Vielzahl von Vulkanisationsmitteln in Kombination mit elementarem Schwefel.

Ganz besonders bevorzugt sind jedoch Vulkanisationssysteme auf der Basis von elementarem Schwefel, Zinkoxid und organischen Vulkanisationsbeschleunigern einschließlich organischen Zinkverbindungen. Der pulverförmige Schwefel wird dabei in Mengen von 6 bis 10 Gew.-%, bezogen auf die Gesamtzusammensetzung eingesetzt. Besonders bevorzugt werden Mengen zwischen 6 und 8 Gew.-% eingesetzt. Als organische Beschleuniger eignen sich Dithiocarbamate (in Form ihrer Ammonium- beziehungsweise Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger. Ganz besonders bevorzugt wird Dibenzothiazyldisulfid (MBTS), 2-Mercaptobenzthiazol (MBT), dessen Zinksalz (ZMBT) oder Diphenylguanidin sowie Zink-dibenzyldithiocarbamat (ZBEC). Erfindungsgemäß werden besonders vorteilhafte Vulkanisationseigenschaften sowie Endeigenschaften der ausgehärteten Kautschuk-Zusammensetzungen erzielt, wenn ein kombiniertes Vulkanisationssystem aus elementarem Schwefel und als Beschleuniger wirkenden Zinkverbindungen wie beispielsweise Zinksalze von Fettsäuren, Zinkdithiocarbamate, basische Zinkcarbonate sowie insbesondere feinteiliges Zinkoxid gewählt wird. Besonders bevorzugt ist ein Beschleunigersystem aus Zinkoxid, ZBEC und ZMBT. Der Gesamtgehalt an Zinkoxid und den genannten organischen Verbindungen, insbesondere organischen Zinkverbindungen, liegt vorzugsweise im Bereich zwischen 0,25 und 20 Gew.-%. Dabei wird Zinkoxid vorzugsweise in Mengen von 3 bis 7 Gew.-%, insbesondere von 3,5 bis 6 Gew.-%, ZBEC in Mengen von 0,5 bis 2 Gew.-%, insbesondere von 0,7 bis 1,5 Gew-%, und ZMBT in Mengen von 0,2 bis 1 Gew.-%, insbesondere von 0,3 bis 0,7 Gew.-% eingesetzt, jeweils bezogen auf die gesamte Zusammensetzung.

Weiterhin enthält die erfindungsgemäße Zusammensetzung vorzugsweise Füllstoffe. Die Füllstoffe können aus einer Vielzahl von Materialien ausgewählt werden. Insbesondere sind hier zu nennen Kreiden, natürliche oder gemahlene Calciumcarbonate, Calcium-Magnesiumcarbonate, Silikate, Talkum, Schwerspat sowie Ruß oder Graphit. Es kann ggf. zweckmäßig sein, dass zumindest ein Teil der Füllstoffe oberflächenvorbehandelt ist. Insbesondere hat sich bei den verschiedenen Calciumcarbonaten beziehungsweise Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Bevorzugterweise enthält die Zusammensetzung 25 bis 55 Gew.-%, bezogen auf die gesamte Zusammensetzung, Erdalkalimetallcarbonat, vorzugsweise Calciumcarbonat (insbesondere in Form von Kreide), das teilweise mit Fettsäure überzogen sein kann.

Erwünschtenfalls können die erfindungsgemäßen Zusammensetzungen zur weiteren Verringerung der Feuchtigkeitsempfindlichkeit noch bis zu 8 Gew.-%, vorzugsweise zwischen 3 und 5 Gew.-%, bezogen auf die gesamte Zusammensetzung, an Calciumoxid enthalten.

Weiterhin enthält die erfindungsgemäße Zusammensetzung vorzugsweise Zinkoxid, wobei Mengen von insgesamt bis zu 8 Gew.-%, bezogen auf die gesamte Zusammensetzung, vorzugsweise 2 bis 6 Gew.-% Zinkoxid, besonders bevorzugt sind.

Eine Kombination von Calciumoxid und Zinkoxid als erfindungsgemäßen Bestandteilen der Zusammensetzungen ist ebenfalls bevorzugt.

Weiterhin enthält die erfindungsgemäße Zusammensetzung vorzugsweise, bezogen auf die gesamte Zusammensetzung, insgesamt bis zu 12 Gew.-%, vorzugsweise 5 bis 9 Gew.-%, Ruß und/oder Graphit.

In einer weiteren bevorzugten Ausführungsform der vorliegenden Erfindung enthalten die Zusammensetzungen, bezogen auf die gesamte Zusammensetzung bis zu 5 Gew.-% Silica, vorzugsweise 0,5 bis 3 Gew.-% Silica. In Rahmen dieser Ausführungsform hat es sich als besonders vorteilhaft erwiesen, wenn feinteiliges Silica, vorzugsweise mit einer mittleren Teilchengröße von weniger als 100nm verwendet wird.

Weiterhin hat es sich als vorteilhaft erwiesen, wenn die erfindungsgemäßen Zusammensetzungen eine Kombination aus Calciumoxid, Calciumcarbonat und Graphit enthalten. Besonders vorteilhafter Weise enthalten die erfindungsgemäßen Zusammensetzungen eine Kombination aus Calciumoxid, Zinkoxid, Calciumcarbonat und Graphit. Ganz besonders bevorzugt ist es, wenn die erfindungsgemäßen Zusammensetzungen Calciumoxid, Zinkoxid, Calciumcarbonat, Silica und Graphit enthalten.

Um die erwünschte Klebefestigkeit zu erzielen ist es vorteilhaft, wenn die Zusammensetzung, bezogen auf die gesamte Zusammensetzung, nicht mehr als 10 Gew.-%, vorzugsweise nicht mehr als 5 Gew.-% und insbesondere nicht mehr als 2 Gew.-%, bei 22 °C flüssige organische Verbindungen (wie beispielsweise Extenderöle, Weißöl oder Weichmacher) enthält, die bei der Härtungsreaktion nicht chemisch in das entstehende Polymernetzwerk eingebunden werden. Besonders bevorzugt sind nicht mehr als 0,5 Gew.-% und insbesondere keine solcher Verbindungen enthalten.

Gegen den thermischen, thermooxidativen oder Ozon - Abbau der erfindungsgemäßen Zusammensetzungen können konventionelle Stabilisatoren oder Alterungsschutzmittel, wie z.B. sterisch gehinderte Phenole oder Aminderivate eingesetzt werden, typische Mengenbereiche für diese Stabilisatoren sind 0,1 bis 5 Gew.%.

Gegenüber bekannten Kleb- und Dichtstoffen und Versiegelungsmitteln auf Kautschukbasis zeichnen sich die erfindungsgemäßen Zusammensetzungen durch die Abwesenheit von Festkautschuk aus. (Festkautschuke haben bekanntlich Molekulargewichte oberhalb 100 000.) Dies beeinflusst das rheologische Verhalten und die mechanischen Eigenschaften nach dem Abbinden positiv. Weiterhin erleichtert die Abwesenheit von Festkautschuk die Produktion, da kein Kneter als Mischoprgan zur Miastifizierung verwendet werden muss. Einfache Dispergatoren, Planten- oder Balkenmischer sind ausreichend.

Das Wesen der Erfindung liegt darin, dass die erfindungsgemäßen Zusammensetzungen gleichzeitig sowohl als Bördelnahtversiegelung als auch als Bördelnahtklebstoff geeignet sind. Daher liegt ein weiterer Aspekt der vorliegenden Erfindung in der Verwendung einer erfindungsgemäßen Zusammensetzung als Bördelnahtversiegelung, inbesondere im Fahrzeugbau, und ein weiterer Aspekt in der Verwendung einer erfindungsgemäßen Zusammensetzung als Bördelnahtklebstoff, inbesondere im Fahrzeugbau. Insbesondere wird die erfindungsgemäße Zusammensetzung gleichzeitig sowohl als Bördelnahtversiegelung als auch als Bördelnahtklebstoff eingesetzt. Daher liegt ein weiterer Aspekt der Erfindung in einem Fahrzeug, bei dem Bördelnähte mit einer erfindungsgemäßen Zusammensetzung nach deren Aushärtung verklebt und/oder versiegelt sind, insbesondere sowohl verklebt als auch versiegelt sind.

Gegenüber dem Stand der Technik, d.h. kautschukbasierten Produkten mit plastisolartigem Fliessverhalten, weisen die oben beschriebenen kautschukbasierten Produkte eine sehr hohe Elastizität (> 130 %) bei gleichzeitig hoher Festigkeit (Zugscherfestigkeit > 4 MPa) auf. Zusätzlich ist die gute Alterungsbeständigkeit ein großer Vorteil gegenüber PVC und / oder PMMA Plastisolen.

Mit den o. g. hohen Elastizitäten und Festigkeiten können qualitativ bessere, d.h. stabilere und alterungsbeständigere Anbauteile wie beispielsweise Türen, Front- und Heckklappen erhalten werden: Die höhere Elastizität bei der Anwendung des Produkts als Bördelnahtversiegelung führt zu einer verbesserten Alterungs- und Dauerbeständigkeit der Bauteile im Betrieb. Die höhere Festigkeit (Zugscherfestigkeit beziehungsweise Winkelschälfestigkeit) bei der Anwendung des Produkts als Bördelnahtklebstoff trägt wesentlich zur Stabilität der Bauteile bei.

Weiterhin führt die vorliegende Erfindung zu folgenden Vorteilen:
- Reduktion von Logistik bei Anwendung der o. g. Produkte als Kombiprodukt (kosmetische) Versiegelung / Bördelnahtklebstoff und damit Kosteneinsparung für den Anwender. (Einsparung von Investitionskosten beispielswesie für Roboterapplikation, da mit einem einzigen Roboter Versiegelung und Bördelnahtklebstoff appliziert werden kann.)
- Vorhärtbarkeit der Produkte für anschließende Handhabung der Bauteile bei niedrigen Temperaturen.
- Durch die kombinierte Anwendung der o. g. Zusammensetzung als Bördelnahtklebstoff und Bördelnahtversiegelung am gleichen Bauteil ergibt sich der Vorteil, dass es keinerlei Unverträglichkeiten zwischen beiden Anwendungen gibt und die Bördelnaht dadurch vollständig gefüllt beziehungsweise überfüllt werden kann. Dies geht einher mit einer deutlichen Qualitätssteigerung und einer Erhöhung der Anzahl der "first run rate".

### Ausführungsbeispiele

Die in den Beispielen verwendeten Mengenangaben verstehen sich - sofern nicht anderes vermerkt ist - in Gewichtsprozent.

Die Rohstoffe gemäß nachstehender Tabelle I wurden miteinander vermischt und die anwendungstechnischen und klebetechnischen Eigenschaften nach Aushärtung gemäß Tabelle II beziehungsweise III bestimmt.

Die Rezepturen V1 und V2 stellen Vergleichsbeispiele für eine Bördelnahtversiegelung beziehungsweise einen Bördelnahtklebstoff dar. Insbesondere wird die gegenüber den Vergleichsbeispielen hohe Reißdehnung bei gleichzeitig hoher Reißfestigkeit und Zugscherfestigkeit der erfindungsgemäßen Rezepturen E1 bis E8 deutlich, welche die ausgehärtete Masse sowohl als Bördelnahtklebstoff als auch als Bördelnahtversiegelung geeignet machen.

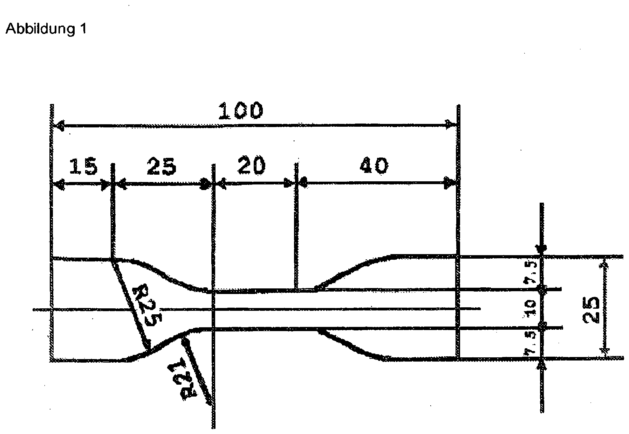

Abbildung 1 zeigt den für die Messung der Reißprüfung verwendeten Prüfkörper (Maße in mm).

### Meßaufbau Zugscherfestigkeitspürfung:

Mit dem resultierenden Klebstoff wurden zwei 100x25x0,8 mm Stahlproben (Galvannealed) mit einer Überlappungsfläche von 25x25 mm und einer Schichtdicke von 1,0 mm (Abstandshalter: Glaskugeln) benetzt und verklebt. Anschließend wurden die Proben für 20 Minuten bei 170°C ausgehärtet. Nach 24 h bei Raumtemperatur wurde die Zugscherfestigkeit des Klebstoffs gemäß DIN EN 1465 mit einer Geschwindigkeit von 50mm/min getestet.

### Meßaufbau T-Peel-Prüfung:

Mit dem resultierenden Klebstoff wurden zwei 200x25x0,8 mm Stahlproben (Galvannealed) mit einer Überlappungsfläche von 25×100 mm und einer Schichtdicke von 0,15 mm (Abstandshalter: Glaskugeln) benetzt und verklebt. Anschließend wurden die Proben für 20 Minuten bei 170°C ausgehärtet.

Nach 24 h wurde die Schälfestigkeit (T-Peel) des Klebstoffs gemäß DIN EN ISO 11339 mit einer Geschwindigkeit von 200mm/min getestet.

**Tabelle I**

| Rohstoff | V1 | V2 | E1 | E2 | E3 | E4 | E5 | E6 | E7 | E8 |
|---|---|---|---|---|---|---|---|---|---|---|
| Flüssiges cis-1,4-Polyisopren, Mw 29000 | 7 | 10 | 9,40 | 10,60 | 11,10 | 10,2 | - | - | - | - |
| Flüssiges cis-1,4-Polyisopren, Mw 49000 | - | - | - | - | - | - | 10,60 | 10,60 | 15,00 | 10,60 |
| Polybutadien mit aktiven Carboxylanhydridgruppen, MG ca. 1800-2400 | 2,7 | 2,5 | 5,40 | 5,30 | 5,30 | 5,32 | 5,30 | 5,30 | 5,30 | 5,30 |
| Polybutadien flüssig, MG ca. 1800, Anteil cis-1,4 ca. 75 % | 12,8 | 7 | 23,10 | 22,90 | 22,50 | 23,69 | 22,00 | 22,00 | 17,00 | 21,00 |
| niedermolekulares stereospezifisches Polybutadienöl, Mn 1800, Anteil vinyl-1,2 ca. 50 % | 10,25 | 5 | 1,60 | 1,76 | 1,76 | 1,6 | 1,76 | 1,76 | 1,76 | 3,76 |
| CaO | 8 | 15 | 3,60 | 3,53 | 3,53 | 3,55 | 3,53 | 3,53 | 3,53 | 3,53 |
| ZnO | 8 | 15 | 4,50 | 4,42 | 4,42 | 4,44 | 4,42 | 4,42 | 4,42 | 4,42 |
| Antioxidans (z.B. 2,2-Methylen-bis-(4-methyl-6-tert.-butylphenol)) | 0,5 | 0,5 | 0,44 | 0,44 | 0,44 | 0,44 | 0,44 | 0,44 | 0,44 | 0,44 |
| Kreide | - | 9,25 | 35,40 | 34,85 | 33,65 | 34,96 | 34,85 | 34,85 | 35,45 | 33,85 |
| Kreide; gecoatet mit Stearat | 9,4 | 12 | - | - | 1,10 | - | 0,90 | 1,25 | - | - |
| Aerosil^{®} 200 | - | - | - | - | - | - | - | - | 1,25 | 1,25 |
| Graphit | - | 1 | 7,20 | 7,10 | 7,10 | 7,1 | 7,10 | 7,10 | 7,10 | 7,10 |
| Schwefel | 1,75 | 4,75 | 7,36 | 7,10 | 7,10 | 6,48 | 7,10 | 6,50 | 6,50 | 6,50 |
| Zink-dibenzyldithiocarbamat (ZBEC) | 1 | - | 0,90 | 0,90 | 0,90 | 1,15 | 0,90 | 0,90 | 0,90 | 0,90 |
| Zink-2-Mercapto-benzothiazol (ZMBT) | 0,8 | - | 0,40 | 0,40 | 0,40 | 0,40 | 0,40 | 0,40 | 0,40 | 0,40 |
| Hexamethylenbisthiosulfat | - | 0,5 | 0,70 | 0,70 | 0,70 | 0,67 | 0,70 | 0,95 | 0,95 | 0,95 |
| Titandioxid | 3 | - | - | - | - | - | - | - | - | - |
| technisches Weißöl | 10,5 | 12 | - | - | - | - | - | - | - | - |
| Mercaptobenzothiazol (MBTS) | 4,5 | 5 | - | - | - | - | - | - | - | - |
| Magnesium-Aluminium-Silikat | 19,3 | - | - | - | - | - | - | - | - | - |
| 65 % p-Benzochinondioxim, phelgmatisiert mit Mineralöl | 0,5 | 0,5 | - | - | - | - | - | - | - | - |
| | 100 | 100 | 100 | 100 | 100 | 100 | 100 | 100 | 100 | 100 |

**Tabelle II**

| Eigenschaften vor der Aushärtung | V1 | V2 | E1 | E2 | E3 | E4 | E5 | E6 | E7 | E8 |
|---|---|---|---|---|---|---|---|---|---|---|
| Viskosität η∞ nach Bingham bei 35 °C (Scherrate 0,01 - 10 1/s, Platte/Platte-Rotation 20 mm, Plattenabstand 0,2 mm, 60 s Vortemperierung, 30 Punkte) | 36,7 | 34,9 | 31,4 | 30,6 | 36,5 | 32,5 | 82,3 | 114,3 | 196 | 94,0 |
| [Pas] | | | | | | | | | | |
| Fließgrenze bei 35 °C | 65,3 | 89,5 | 35,8 | 31,4 | 57,3 | 62,1 | 110,9 | 289,0 | 480 | 619,0 |
| [Pa] | | | | | | | | | | |

**Tabelle III**

| mechanische Eigenschaften nach Härtung bei 20 min bei 170 °C | V1 | V2 | E1 | E2 | E3 | E4 | E5 | E6 | E7 | E8 |
|---|---|---|---|---|---|---|---|---|---|---|
| Reißdehnung, Dicke 2 mm, 50 mm/min | 127 | 62 | 138 | 176 | 182 | 131 | 131 | 162 | 159 | 151 |
| [%] | | | | | | | | | | |
| Reißfestigkeit | 0,61 | 2,5 | 4,8 | 4,9 | 5,0 | 4,7 | 5,4 | 5,1 | 4,9 | 5,2 |
| [MPa] | | | | | | | | | | |
| Zugscherfestigkeit (25x25x1 mm), galvannealed, Metallstärke 0,8 mm, 50 mm/min | 0,6 | 4,75 | 4,50 | 4,30 | 4,90 | 4,00 | 4,80 | 5,40 | 4,1 | 4,40 |
| [MPa] | | | | | | | | | | |
| T-Peel., 100 x 25 mmm, galvannealed, Schichtdicke 0,15 mm, Metallstärke 0,8 mm, 200 mm/min | - | 2,8 | 4,8 | 4,9 | 5,2 | 3,9 | 4,7 | 5,7 | 4,5 | 3,9 |
| [N/mm] | | | | | | | | | | |

## Patentansprüche

1. Heiß härtende reaktive Zusammensetzung auf der Basis von natürlichen und/oder synthetischen, olefinische Doppelbindungen enthaltenden Polymeren und Vulkanisationsmitteln, die
a) mindestens ein flüssiges cis-1,4-Polyisopren mit einem gewichtsmittleren Molekulargewicht zwischen 20000 und 70000
b) ein Vulkanisationssystem
c) mindestens ein bei 22 °C flüssiges Polybutadien,
enthält,
**dadurch gekennzeichnet, dass**
- das flüssige cis-1,4-Polyisopren a) einen Anteil an der gesamten Zusammensetzung im Bereich von 9 bis 15 Gew.-% hat,
- als Vulkanisationssystem b), bezogen auf die gesamte Zusammensetzung, 6 bis 10 Gew.-% Schwefel und 0,25 bis 20 Gew.-% Vulkanisationsbeschleuniger enthalten sind,
und
- das bei 22 °C flüssige Polybutadien c) einen Anteil an der gesamten Zusammensetzung im Bereich von 16 bis 29 Gew.-% hat.

2. Zusammensetzung nach Anspruch 1, **dadurch gekennzeichnet, dass** in dem bei 22 °C flüssigen Polybutadien c) 60 bis 90 % der Doppelbindungen als cis-1,4-Doppelbindungen vorliegen.

3. Zusammensetzung nach mindestens einem der Ansprüche 1 und 2, **dadurch gekennzeichnet, dass** das bei 22 °C flüssige Polybutadien c) ein gewichtsmittleres Molekulargewicht im Bereich von 1500 bis 3000 aufweist.

4. Zusammensetzung nach einem oder mehreren der Ansprüche 1 bis 3, **dadurch gekennzeichnet, dass** sie als weitere Komponente
d) 0,5 bis 3,5 Gew.-%, bezogen auf die gesamte Zusammensetzung, bei 22 °C flüssiges stereospezifisches Polybutadien mit einem vinyl-1,2-Anteil im Bereich von 40 bis 60 % und mit einem gewichtsmittleren Molekulargewicht im Bereich von 1500 bis 3000 enthält.

5. Zusammensetzung nach einem oder mehreren der Ansprüche 1 bis 4, **dadurch gekennzeichnet, dass** sie als weitere Komponente
e) 2 bis 8 Gew.-%, bezogen auf die gesamte Zusammensetzung, bei 22 °C flüssiges Polybutadien mit Carboxyl- oder Carboxylanhydridgruppen und mit einem gewichtsmittleren Molekulargewicht im Bereich von 1500 bis 3000 enthält.

6. Zusammensetzung nach einem oder mehreren der Ansprüche 1 bis 5, **dadurch gekennzeichnet, dass** der Vulkanisationsbeschleuniger ausgewählt wird aus Zinkoxid und schwefelhaltigen organischen Verbindungen, insbesondere organischen Zinkverbindungen.

7. Zusammensetzung nach einem oder mehreren der Ansprüche 1 bis 6, **dadurch gekennzeichnet, dass** sie zusätzlich, bezogen auf die gesamte Zusammensetzung, f) 25 bis 55 Gew.-% Erdalkalimetallcarbonat, vorzugsweise Calciumcarbonat, enthält, das teilweise mit Fettsäure überzogen sein kann.

8. Zusammensetzung nach einem oder mehreren der Ansprüche 1 bis 7, **dadurch gekennzeichnet, dass** sie zusätzlich, bezogen auf die gesamte Zusammensetzung, g) bis zu 8 Gew.-%, vorzugsweise 3 bis 5 Gew.-% Calciumoxid enthält.

9. Zusammensetzung nach einem oder mehreren der Ansprüche 1 bis 8, **dadurch gekennzeichnet, dass** sie zusätzlich, bezogen auf die gesamte Zusammensetzung, h) insgesamt bis zu 12 Gew.-%, vorzugsweise 5 bis 9 Gew.-%, Ruß und/oder Graphit enthält.

10. Zusammensetzung nach einem oder mehreren der Ansprüche 1 bis 6, **dadurch gekennzeichnet, dass** sie, bezogen auf die gesamte Zusammensetzung, nicht mehr als 10 Gew.-%, vorzugsweise nicht mehr als 5 Gew.-% und insbesondere nicht mehr als 2 Gew.-%, bei 22 °C flüssige organische Verbindungen enthält, die bei der Härtungsreaktion nicht chemisch in das entstehende Polymernetzwerk eingebunden werden.

11. Zusammensetzung nach mindestens einem der vorhergehenden Ansprüche, **dadurch gekennzeichnet, dass** sie frei ist von Festkautschuken.

12. Verwendung einer Zusammensetzung nach einem oder mehreren der Ansprüche 1 bis 11 als Bördelnahtversiegelung, insbesondere im Fahrzeugbau.

13. Verwendung einer Zusammensetzung nach einem oder mehreren der Ansprüche 1 bis 11 als Bördelnahtklebstoff, insbesondere im Fahrzeugbau.

14. Fahrzeug, bei dem Bördelnähte mit einer Zusammensetzung nach einem oder mehreren der Ansprüche1 bis 11 nach deren Aushärtung verklebt und/oder versiegelt sind.

## Claims

1. A heat-curing reactive composition based on natural and/or synthetic polymers containing olefinic double bonds, and vulcanizing agents, which composition contains
a) at least one liquid cis-1,4-polyisoprene having a weight-average molecular weight of between 20,000 and 70,000
b) a vulcanization system
c) at least one polybutadiene which is liquid at 22 °C,
**characterized in that**
- the liquid cis-1,4-polyisoprene a) has a proportion of the total composition in the range from 9 to 15 wt.%,
- 6 to 10 wt.% of sulfur and 0.25 to 20 wt.% of vulcanization accelerator, based on the total composition, are contained as the vulcanization system b), and
- the polybutadiene c) which is liquid at 22 °C has a proportion of the total composition in the range from 16 to 29 wt.%.

2. The composition according to claim 1, **characterized in that**, in the polybutadiene c) which is liquid at 22 °C, 60 to 90% of the double bonds are in the form of cis-1,4 double bonds.

3. The composition according to at least one of claims 1 and 2, **characterized in that** the polybutadiene c) which is liquid at 22 °C has a weight-average molecular weight in the range from 1,500 to 3,000.

4. The composition according to one or more of claims 1 to 3, **characterized in that** it contains, as a further component,
d) 0.5 to 3.5 wt.%, based on the total composition, of stereospecific polybutadiene which is liquid at 22 °C and has a 1,2-vinyl content in the range from 40 to 60% and a weight-average molecular weight in the range from 1,500 to 3,000.

5. The composition according to one or more of claims 1 to 4, **characterized in that** it contains, as a further component,
e) 2 to 8 wt.%, based on the total composition, of polybutadiene which is liquid at 22 °C, comprises carboxyl or carboxyanhydride groups and has a weight-average molecular weight in the range from 1,500 to 3,000.

6. The composition according to one or more of claims 1 to 5, **characterized in that** the vulcanization accelerator is selected from zinc oxide and sulfur-containing organic compounds, in particular organic zinc compounds.

7. The composition according to one or more of claims 1 to 6, **characterized in that** it additionally contains, based on the total composition,
f) 25 to 55 wt.% of alkaline earth metal carbonate, preferably calcium carbonate, which may be partially coated with fatty acid.

8. The composition according to one or more of claims 1 to 7, **characterized in that** it additionally contains, based on the total composition,
g) up to 8 wt.%, preferably 3 to 5 wt.%, of calcium oxide.

9. The composition according to one or more of claims 1 to 8, **characterized in that** it additionally contains, based on the total composition,
h) a total of up to 12 wt.%, preferably 5 to 9 wt.%, of carbon black and/or graphite.

10. The composition according to one or more of claims 1 to 6, **characterized in that**, based on the total composition, it contains no more than 10 wt.%, preferably no more than 5 wt.%, and in particular no more than 2 wt.%, of organic compounds which are liquid at 22 °C and non-chemically incorporated into the resulting polymer network during the curing reaction.

11. The composition according to at least one of the preceding claims, **characterized in that** it is free from solid rubbers.

12. The use of a composition according to one or more of claims 1 to 11 as a flanged seam sealant, in particular in vehicle construction.

13. The use of a composition according to one or more of claims 1 to 11 as a flanged seam adhesive, in particular in vehicle construction.

14. A vehicle in which flanged seams are adhesively bonded and/or sealed by means of a composition according to one or more of claims 1 to 11 after said composition has cured.

## Revendications

1. Composition réactive thermodurcissable à base de polymères et d'agents de vulcanisation naturels et/ou synthétiques contenant des liaisons doubles oléfiniques, laquelle contient
a) au moins un cis-1,4-polyisoprène liquide ayant un poids moléculaire moyen en poids compris entre 20 000 et 70 000
b) un système de vulcanisation
c) au moins un polybutadiène liquide à 22 °C,
**caractérisée en ce que**
- le cis-1,4-polyisoprène liquide a) présente une proportion de la composition totale dans la plage de 9 à 15 % en poids,
- 6 à 10 % en poids de soufre et 0,25 à 20 % en poids d'accélérateurs de vulcanisation, par rapport à la composition totale, sont contenus en tant que système de vulcanisation b),
et
- le polybutadiène liquide à 22 °C c) présente une proportion de la composition totale dans la plage de 16 à 29 % en poids.

2. Composition selon la revendication 1, **caractérisée en ce que** dans le polybutadiène liquide à 22 °C c), 60 à 90 % des liaisons doubles sont présentes sous forme de liaisons doubles cis-1,4.

3. Composition selon au moins l'une des revendications 1 et 2, **caractérisée en ce que** le polybutadiène liquide à 22 °C c) a un poids moléculaire moyen en poids dans la plage de 1 500 à 3 000.

4. Composition selon une ou plusieurs des revendications 1 à 3, **caractérisée en ce qu'**elle contient, en tant que composants supplémentaires
d) 0,5 à 3,5 % en poids, par rapport à la composition totale, de polybutadiène stéréospécifique liquide à 22 °C comportant une proportion en vinyle-1,2 dans la plage de 40 à 60 % et ayant un poids moléculaire moyen en poids dans la plage de 1 500 à 3 000.

5. Composition selon une ou plusieurs des revendications 1 à 4, **caractérisée en ce qu'**elle contient, en tant que composants supplémentaires
e) 2 à 8 % en poids, par rapport à la composition totale, de polybutadiène liquide à 22 °C comportant des groupes carboxyle ou anhydride carboxylique et ayant un poids moléculaire moyen en poids dans la plage de 1 500 à 3 000.

6. Composition selon une ou plusieurs des revendications 1 à 5, **caractérisée en ce que** l'accélérateur de vulcanisation est choisi parmi l'oxyde de zinc et des composés organiques soufrés, en particulier des composés de zinc organiques.

7. Composition selon une ou plusieurs des revendications 1 à 6, **caractérisée en ce qu'**elle contient en outre, par rapport à la composition totale,
f) 25 à 55 % en poids de carbonate de métal alcalino-terreux, de préférence de carbonate de calcium, lequel peut être partiellement recouvert d'acide gras.

8. Composition selon une ou plusieurs des revendications 1 à 7, **caractérisée en ce qu'**elle contient en outre, par rapport à la composition totale,
g) jusqu'à 8 % en poids, de préférence 3 à 5 % en poids, d'oxyde de calcium.

9. Composition selon une ou plusieurs des revendications 1 à 8, **caractérisée en ce qu'**elle contient en outre, par rapport à la composition totale,
h) au total jusqu'à 12 % en poids, de préférence 5 à 9 % en poids, de noir de carbone et/ou de graphite.

10. Composition selon une ou plusieurs des revendications 1 à 6, **caractérisée en ce qu'**elle contient, par rapport à la composition totale, pas plus de 10 % en poids, de préférence pas plus de 5 % en poids et en particulier pas plus de 2 % en poids, de composés organiques liquides à 22 °C, lesquels ne sont pas intégrés chimiquement dans le réseau polymère formé lors de la réaction de durcissement.

11. Composition selon au moins l'une des revendications précédentes, **caractérisée en ce qu'**elle est exempte de caoutchoucs solides.

12. Utilisation d'une composition selon une ou plusieurs des revendications 1 à 11 en tant que scellage de joint à bords bridés, en particulier dans la construction automobile.

13. Utilisation d'une composition selon une ou plusieurs des revendications 1 à 11 en tant que colle pour joint à bords bridés, en particulier dans la construction automobile.

14. Véhicule dans lequel des joints à bords bridés sont collés et/ou scellés avec une composition selon une ou plusieurs des revendications 1 à 11 après son durcissement.
